# EUROPÄISCHE PATENTSCHRIFT

(11) **EP 2 599 574 B1**
(45) Veröffentlichungstag und Bekanntmachung des Hinweises auf die Patenterteilung: **30.11.2016**
(21) Anmeldenummer: 11191367.9
(22) Anmeldetag: 30.11.2011
(51) Int. Cl.: B23K 26/02, B23K 26/04

(54) **Laseroptik mit passiver Nahtführung**
Laser lens with passive seam tracking
Optique laser doté d'un guidage de soudure passif

(43) Veröffentlichungstag der Anmeldung: 05.06.2013
(73) Patentinhaber: Scansonic MI GmbH, 12681 Berlin (DE)
(72) Erfinder: Walter, Steffen, 13129 Berlin (DE); Lange, André, 10247 Berlin (DE)
(74) Vertreter: Eisenführ Speiser

(56) Entgegenhaltungen:
- EP-A1- 1 762 328
- DE-A1-102005 019 422

## Beschreibung

### Gebiet der Erfindung

Die vorliegende Erfindung betrifft eine Vorrichtung zum Führen eines Laserstrahls, insbesondere entlang einer Naht oder einer Fuge, beispielsweise zur Verwendung in einem Laserbearbeitungssystem. Die Erfindung eignet sich vor allem für eine Anwendung in den Bereichen Laserfügen sowie Laserhärten.

### Technischer Hintergrund der Erfindung

Ein Laserbearbeitungskopf sollte beim Fügen genau über die Naht geführt werden, um beispielsweise Kehl- und Bördelnähte in hoher Qualität erzeugen zu können. Gegenüber optisch implementierten Strahlführungssystemen zeigen Laserbearbeitungsoptiken, die taktil geführt werden, einige Vorteile, die sich beispielsweise in kompakten und vergleichsweise einfachen Bauweisen sowie im Ergebnis in einem genau geführten Laserstrahl äußern.

Das Prinzip der taktilen Nahtführung und eine entsprechende Vorrichtung sind in der europäischen Patentschrift EP 1762328 A1 beschrieben. Zur Strahlführung ist der mechanische Taster dort über ein Rotationsmodul an ein Strahlumlenkmodul gekoppelt. Das Rotationsmodul hat einen elastischen Energiespeicher in Gestalt zweier Spiralfedern, in den das Strahlumlenkmodul mit Hilfe so bezeichneter Mitnehmer eingreift. Im Falle eines ausgeschwenkten Strahlumlenkmoduls wirken über das Rotationsmodul Rückstellkräfte, die das Strahlumlenkmodul wieder in eine Ruheposition bringen, nämlich dann, wenn auf den mechanischen Taster keine äußeren Kräfte wirken. Das Rotationsmodul ist damit zweiteilig ausgestaltet, wobei die erste der beiden Teileinheiten des elastischen Energiespeichers, also die erste Feder, in die eine der beiden Auslenkungsrichtungen wirkt und die andere Teileinheit, also die zweite Feder, in die andere Auslenkungsrichtung wirkt. Die beiden Federn wirken gemäß der Darstellung in Fig. 2 und Fig. 3 der Schrift EP 1762328 A1 gegeneinander. Dabei endet der Wirkungsbereich der beiden Teileinheiten jeweils an der Mittellage des Strahlumlenkmoduls. Die Begrenzung des Wirkungsbereichs der beiden Teileinheiten des elastischen Energiespeichers erfolgt dort durch einen Anschlag.

Es ist ein der vorliegenden Erfindung zugrunde liegendes technisches Problem, eine alternative Vorrichtung zum taktilen Führen eines Laserstrahls bereitzustellen.

### Beschreibung der Erfindung

Das oben genannte technische Problem wird erfindungsgemäß gelöst durch eine Vorrichtung zum Führen eines Laserstrahls entlang eines Zielverlaufs, die folgende Komponenten aufweist:
- ein Laserstrahleingangsmodul, das ausgebildet ist, einen einfallenden Laserstrahl auf eine dem Laserstrahleingangsmodul nachgelagerte und schwenkbare Strahlführungseinrichtung zu richten, wobei die Strahlführungseinrichtung zum Projizieren des Laserstrahls auf den Zielverlauf angeordnet ist und umfasst
- eine entlang wenigstens einer Schwenkachse schwenkbare Optik und
- einen mit der schwenkbaren Optik verbundenen taktilen Abtaster, der ausgebildet ist, den Zielverlauf berührend abzutasten und die schwenkbare Optik entsprechend auszulenken, wobei
- sich im Strahlengang des Laserstrahls vor der schwenkbaren Optik ein Zwischenfokuspunkt befindet und die Schwenkachse der schwenkbaren Optik durch den Zwischenfokuspunkt verläuft.

Das zusätzliche Erzeugen eines ortsfesten Zwischenfokuspunktes gestattet es, dass die Strahlführungseinrichtung, insbesondere der schwenkbare Teil, mit deutlich weniger Komponenten auskommen kann, als es aus dem Stand der Technik bekannt ist. Nur der Abtaster und die mit dem Abtaster fest verbundene schwenkbare Optik (im Folgenden auch als "Optik" bezeichnet) schwenken entlang einer Rotationslinie um den ortsfesten Zwischenfokus aus. Demnach ist das Trägheitsmoment der ausschwenkenden Teile deutlich reduziert und eine schnellere sowie präzisere Nachführung des Laserfokus möglich.

Dies erlaubt eine kompaktere Bauweise als bisher bekannte Führungsvorrichtungen sowie eine leichtgängigere Nachführung des Laserfokus. So geht beispielsweise aus der EP 1762328 A1 hervor, dass der einfallende Laserstrahl zunächst über einen ersten Umlenkspiegel auf einen zweiten Umlenkspiegel geleitet wird, der dann den Laserstrahl auf eine Fokussieroptik richtet, die Teil des oben erwähnten Strahlumlenkungsmoduls ist. Zur Nachführung des Laserfokus' muss also das gesamte Strahlumlenkmodul mit all seinen Komponenten mittels des Rotationsmoduls ausgeschwenkt werden. Zu dem Strahlumlenkungsmodul gehören neben der Fokussieroptik beispielsweise auch ein Gehäuse, ein Schutzglas, eine Linearführung etc..

Bei der erfindungsgemäßen Vorrichtung wird vorzugsweise der Zwischenfokus von der schwenkbaren Optik auf den Zielverlauf abgebildet. Die schwenkbare Optik ist somit eine bewegliche, abbildende Optik. Der Zielverlauf entspricht beispielsweise einem Verlauf einer Fuge zwischen zu bearbeitenden Werkstücken.

Die wenigstens eine Schwenkachse ist bevorzugt die zur Laserstrahlrichtung (z-Richtung) und Zielverlaufsrichtung (x-Richtung) senkrechte, d.h. laterale, Auslenkrichtung (y-Richtung).

In einer bevorzugten Ausführungsform ist das Laserstrahleingangsmodul ausgebildet, den Laserstrahl auf den Zwischenfokuspunkt zu fokussieren. Dabei ist die schwenkbare Optik ausgebildet, den Zwischenfokuspunkt auf den Zielverlauf abzubilden. Das heißt, dass die schwenkbare Optik einen "gegentandsseitigen" Fokus besitzt, der sich im Zwischenfokuspunkt befindet und einen "bildseitigen" Fokus, der sich auf dem Zielverlauf befindet.

In einer weiteren bevorzugten Ausführungsform ist das Laserstrahleingangsmodul als Lichtleitfaser ausgebildet. Dabei befindet sich der Zwischenfokuspunkt auf der der schwenkbaren Optik zugewandten Seite der Lichtleitfaser. Ferner ist die schwenkbare Optik ausgebildet, den Zwischenfokuspunkt auf den Zielverlauf abzubilden.

In einer anderen bevorzugten Ausführungsform ist das Laserstrahleingangsmodul ausgebildet, einen nicht auf den Zwischenfokuspunkt fokussierten, sondern beispielsweise einen divergenten, kollimierten oder auch nur schwach fokussierten Strahlengang zu erzeugen. Dabei besitzt die schwenkbare Optik eingangsseitig einen virtuellen Zwischenfokus, der den Zwischenfokuspunkt bildet und der sich im kollimierten Strahlengang befindet. Ein solcher Zwischenfokuspunkt kann beispielsweise durch eine dem Lasereingangsmodul im Strahlengang nachgeordnete Zerstreuungslinse bewirkt werden. Die Zerstreuungslinse oder auch mehrelementige Zerstreuungsgruppe ist vorzugsweise nicht mit der schwenkbaren Optik schwenkbar, sondern fest mit dem Lasereingangsmodul verbunden.

In einer weiteren Ausführungsform sind der taktile Abtaster und die schwenkbare Optik an einen Energiespeicher mit einem elastischen Element angeschlossen. Das elastische Element des Energiespeichers ist ausgebildet, einen Teil seiner gespeicherten Energie in Abhängigkeit einer Ausschwenkung der schwenkbaren Optik für das Zurückstellen von Optik und Abtaster in einer Ruheposition bereitzustellen. Die Optik und der Abtaster sind über wenigstens zwei Mitnehmeranschläge an das elastische Element gekoppelt, von denen bei einer Schwenkung der Optik in positive Schwenkachsenrichtung nur der erste Mitnehmeranschlag das elastische Element verformt und bei einer Schwenkung in negative Schwenkachsenrichtung nur der zweite Mitnehmeranschlag das elastische Element verformt.

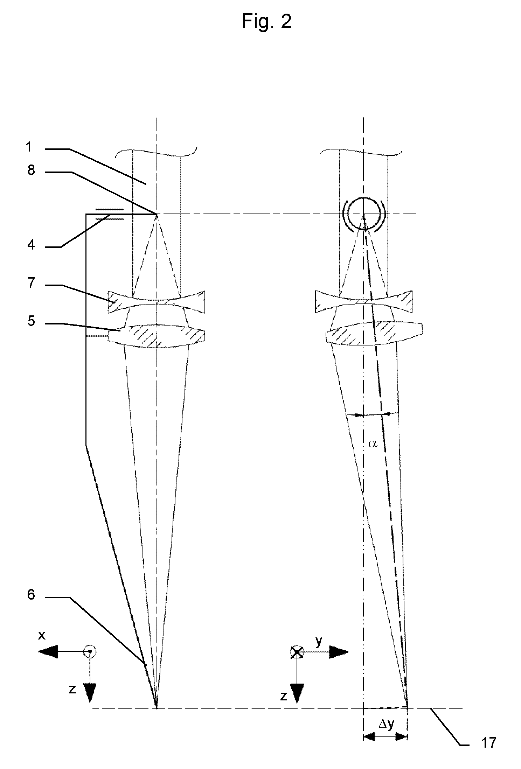

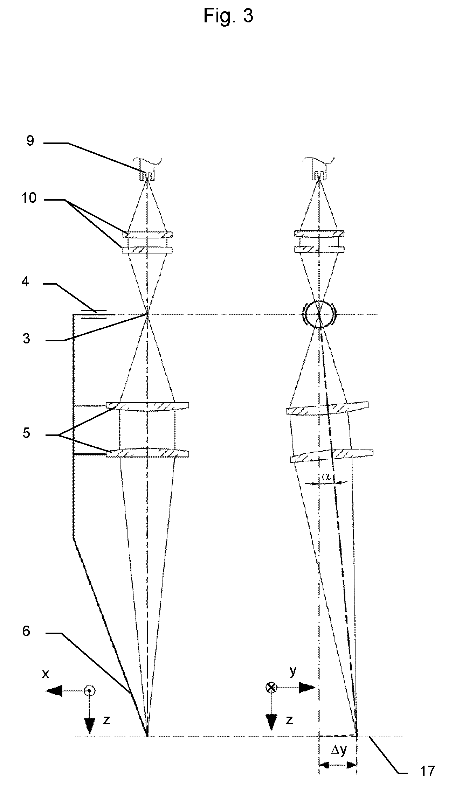

Diese Ausführungsform schließt die Erkenntnis ein, dass die Kopplung zwischen dem mechanischen Abtaster und dem Strahlumlenkmodul gemäß den Fig. 2 und 3 der Schrift EP 1762328 A1 jeweils mit mindestens zwei Federn implementiert sein muss, was sich im Ergebnis als aufwendig, impraktikabel und wenig effizient darstellt: Die beiden Federn beanspruchen einen recht voluminösen Bauraum und die Fehleranfälligkeit ist bei den wenigstens zwei Federn nicht ausreichend gering. Außerdem wird bei bestimmten Bauweisen, beispielsweise gemäß Fig. 3, im Falle einer ausgeschwenkten Optik nur eine der beiden Federn komprimiert, wohingegen die andere Feder keine Kompression erfährt und damit auch keine Rückstellkräfte entfaltet, mithin also jeweils eine Feder für die Rückstellung der Optik nutzlos ist.

Bei dieser Ausführungsform hingegen reicht es aus und ist es bevorzugt, dass der Energiespeicher nur ein einziges elastisches Element, wie beispielsweise eine Feder, aufweist, um den taktilen Abtaster mit der schwenkbaren Optik in beide Schwenkachsenrichtungen zu koppeln und Rückstellkräfte/Zentrierkräfte in jeweils zur Schwenkachsenrichtung entgegengesetzter Richtung zu erwirken. Dadurch kann der Energiespeicher sehr platzsparend in der Vorrichtung zum Führen des Laserstrahls integriert werden, ohne an Funktionalität einzubüßen. Zudem fällt der Energiespeicher, da er mit nur einem einzigen elastischen Element implementierbar ist, kostengünstiger aus und erweist sich als weniger fehleranfällig. Durch die mögliche kompakte Bauweise wird eine Platzersparnis erreicht und die Zugänglichkeit verbessert. Demnach zeigt die vorliegende Erfindung, wie die eingangs hervorgehobenen Vorteile einer taktil geführten Laserbearbeitungsoptik auch durch eine noch kompaktere, kostengünstigere und weniger fehleranfällige Bauweise erzielt werden können, ohne an Präzision einbüßen zu müssen.

Wenigstens ein Teil der für die Abtastung des Zielverlaufs, also bspw. der Fuge/des Fügestoßes, durch den taktilen Abtaster notwendigen lateralen Andruckkraft wird von dem Energiespeicher der Strahlführungseinrichtung bereitgestellt. Diese Andruckkraft ist abhängig von der Ausschwenkung der schwenkbaren Optik. Bevorzugt befindet sich der Energiespeicher bei nicht ausgeschwenkter Optik bzw. bei Abwesenheit von äußeren Kräften auf den taktilen Abtaster in einer definierten Mittellage, wobei jede Auslenkung des Abtasters bzw. jede Ausschwenkung der schwenkbaren Optik aufgrund der Mitnehmeranschläge zu einer Kompression des elastischen Elements führt, also zu einer Erhöhung der im Energiespeicher gespeicherten Energie. Mit dieser Energieerhöhung können die Rückstellkräfte vom Energiespeicher bereitgestellt werden. Insbesondere können diese Rückstellkräfte aufgrund des elastischen Elements stufenlos bereitgestellt werden.

Sinngemäß kann das elastische Element des Energiespeichers also zum einen mechanisch, wie bspw. durch eine Feder, implementiert sein, jedoch zum anderen auch pneumatisch oder elektrisch. Denkbar sind beispielsweise eine Kolben-Zylinder-Anordnung hinsichtlich einer pneumatischen Ausgestaltung oder eine Tauchspulenanordnung hinsichtlich einer elektrischen Ausgestaltung des Energiespeichers. Durch die bestimmte Kopplung der Mitnehmeranschläge an den Energiespeicher ist dabei jeweils aber nur ein einziges "elastisches Element" notwendig.

In einer gemäß dem Vorstehenden bevorzugten Ausführungsform der Vorrichtung zum Führen eines Laserstrahls ist das elastische Element demnach einstückig ausgebildet.

Die oben erwähnte stabile Mittellage wird bei einer bevorzugten Ausführungsform erzielt, indem die beiden Mitnehmeranschläge bei der nicht ausgeschwenkten Ruheposition der Optik das elastische Element unmittelbar kontaktieren. Sobald die Optik ausschwenkt, wird das elastische Element durch genau einen der beiden Mitnehmeranschläge komprimiert, wodurch die Rückstellkräfte entstehen.

In einer konkreten Ausführungsform der Vorrichtung zum Führen eines Laserstrahls ist das elastische Element in einem Gehäuse gelagert, das wenigstens zwei ortsfeste Anschlagsflächen aufweist, wobei das elastische Element bei Auslenkung in positive Schwenkachsenrichtung nur gegen die erste Anschlagsfläche gepresst wird und bei Auslenkung in negative Schwenkachsenrichtung nur gegen die zweite Anschlagsfläche . Auch in dieser Ausführungsform erfolgt die Kompression des elastischen Elements nur durch einen der beiden Mitnehmeranschläge.

In Abwesenheit von äußeren Kräften werden durch die Ausdehnung des elastischen Elements die beiden Mitnehmeranschläge plan zu den ortsfesten Anschlägen des Gehäuses ausgerichtet, wodurch der taktile Abtaster in die Mittellage gebracht wird. Wird der taktile Abtaster durch äußere Nahtführungskräfte ausgelenkt, so wird das elastische Element von einem Mitnehmeranschlag und dem gegenüberliegenden ortsfesten Anschlag zusammengedrückt. Durch eine bevorzugte symmetrische Anordnung der vier Anschlagsflächen ist diese Auslenkbewegung samt lateraler Kraft in positive und negative Auslenkrichtungen möglich.

In einer weiteren bevorzugten Ausführungsform sind eine der beiden Anschlagsflächen und einer der beiden Mitnehmeranschläge in einer Verformungsrichtung des elastischen Elements verstellbar angeordnet. Mit einem von den beiden verstellbaren Anschlägen kann so die Vorspannkraft des elastischen Elements eingestellt werden und mit dem zweiten verstellbaren Anschlag kann ein etwaiges Spiel zwischen den ortsfesten Anschlagsflächen und den Mitnehmeranschlägen reduziert werden. Die Einstellung kann in der Mittellage des taktilen Abtasters, beispielsweise in der Ausgestaltung eines beim Fügen für die Nahtbildung notwendigen Zusatzdrahtes, erfolgen. Im Ergebnis wird so eine weitere Erhöhung der Genauigkeit der Laserstrahlführung erreicht.

Handelt es sich bei dem elastischen Element um eine Feder, so weist diese in einer bevorzugten Ausführungsform der Vorrichtung zum Führen eines Laserstrahls an beiden Enden Druckscheiben auf, wobei die Druckscheiben, die Mitnehmeranschläge und die Anschlagsflächen jeweils kalottenförmig ausgestaltet sind. Dadurch können Schwenkbewegungen ohne separate Gelenke durch die Federanordnung aufgenommen werden.

In einer weiteren bevorzugten Ausführungsform ist der Abtaster etwa in Laserstrahlrichtung über eine elastische Komponente federnd gelagert. So kann ein ständiger Kontakt des Abtasters mit dem Zielverlauf, also bspw. mit einem Fügestoß, gewährleistet werden. Beispielsweise ermöglichen in dieser Ausführungsform ein Teleskoparm und ein Autofokus der abbildenden Optik eine Nachführung des Fokus bei Änderung des Zielverlaufs in z-Richtung, also etwa in Laserstrahlrichtung.

Bei dieser Ausführungsform ist es weiter bevorzugt, dass das Laserstrahleingangsmodul an die elastische Komponente gekoppelt ist. So kann der Laserfokus in Laserstrahlrichtung nachgeführt werden.

Bevorzugt ist die Vorrichtung zum Führen eines Laserstrahls derart ausgestaltet, dass die schwenkbare Optik starr mit dem taktilen Abtaster verbunden ist. Dadurch ist gewährleistet, dass der Abstand zwischen der schwenkbaren Optik und dem Abtaster konstant ist, was insbesondere für den Fall, bei dem der Abtaster einen für eine Nahtbildung notwendigen Zusatzdraht umfasst, mithin durch diesen selbst gebildet ist, vorteilhaft ist, da dann der Laserstrahl immer korrekt fokussiert ist.

In einer bevorzugten Ausführungsform bildet also der Zusatzdraht einen Teil des taktilen Abtasters. Die Nahtführung erfolgt dann verschleißfrei direkt im Arbeitspunkt durch Tastbewegung des Zusatzdrahtes. Selbst kleine Radien und 3D-Konturen können so abgetastet werden. Aufgrund dieses besonderen mechanischen Abtasters sind kein Vorlauf, und demnach auch keine Vorlaufkompensation erforderlich. Weiter ist der Abtastvorgang weitestgehend resistent gegen Störfaktoren, wie beispielsweise Schmutz oder Wärme. Außerdem erlaubt das gleichzeitige Führen und Fügen eine Taktfrequenzerhöhung, also eine Verkürzung der Laserbearbeitungszeit. Ferner lässt sich die Vorrichtung zum Führen eines Laserstrahls so autark gestalten, was ihr einen modularen Charakter verleiht.

Eine Nachführung des Zusatzdrahtes ist in dieser Ausführungsform beispielsweise durch eine Drahtzufuhr-Einrichtung gewährleistet, beispielsweise durch eine solche, wie sie in der EP 1762328 A1 beschrieben ist.

In einer bevorzugten Ausführungsform ist das Laserstrahleingangsmodul ausgebildet, den einfallenden Laserstrahl auf einen zwischen Laserstrahleingangsmodul und Strahlfügungseinrichtung liegenden Zwischenfokuspunkt zu fokussieren. In dieser Ausführungsform ist die Strahlführungseinrichtung ausgebildet, den Laserstrahl mittels der schwenkbaren Optik zu führen, ohne den Zwischenfokuspunkt zu verschieben. Damit bildet der Zwischenfokuspunkt den konstanten Ausgangspunkt einer fiktiven Rotationsachse.

Der einfallende Laserstrahl ist beispielsweise ein kollimierter Laserstrahl oder ein von einem Faserlaser bereitgestellter Strahl, also ein Ausgangsstrahl eines Lichtleiterkabels. Im letzteren Fall kann das Faserende den Zwischenfokus bilden. Alternativ ist zwischen Faserende und Zwischenfokuspunkt eine Zwischenabbildungsoptik zur Fokussierung installiert. Ist der Laserstrahl ein kollimierter Laserstrahl, kann er von einer fest fokussierenden Linse, die Teil des Laserstrahleingangsmoduls sein kann, auf den Zwischenfokuspunkt fokussiert werden (realer Zwischenfokus) oder alternativ von einer dem Laserstrahleingangsmodul und dem Fokuspunkt nachgelagerten zerstreuenden Linse, die sich beispielsweise fest angeordnet in der schwenkbaren Strahlführungseinrichtung befindet (virtueller Zwischenfokus).

Der Laserstrahl kann beispielsweise von einem Festkörperlaser, einem Diodenlaser oder einem Faserlaser erzeugt sein.

Gemäß einem zweiten Aspekt der vorliegenden Erfindung wird das technische Problem gelöst durch ein Laserbearbeitungssystem mit einer Vorrichtung gemäß dem ersten Aspekt der Erfindung.

Sämtliche Lasertypen kommen für das erfindungsgemäße Laserbearbeitungssystem in Betracht. Die erfindungsgemäße Vorrichtung lässt sich insbesondere als Führungsmodul beim nahtgeführten Laserschweißen und -löten vorteilhaft einsetzen, beispielsweise für Stahl- und Aluminiumlegierungen. Zunächst ist die Lasertechnologie für Fügeprozesse hervorragend geeignet. Ein besonderer Vorteil ist die mögliche schmale und gleichmäßige Nahtgeometrie. Der Fügevorgang ist präzise steuerbar und kann mit hoher Geschwindigkeit erfolgen. Die Wärmeeinbringung in das Bauteil und der daraus resultierende Verzug werden durch Laserfügen deutlich reduziert. Aufgrund der qualitativ hochwertigen Fügeergebnisse kann in den meisten Fällen auf eine Nacharbeitung der Naht verzichtet werden. Die Naht selbst ist in gleichbleibend hoher Qualität reproduzierbar. Nunmehr ist aufgrund der erfindungsgemäßen Vorrichtung zum Führen eines Laserstrahls dieses Laserfügeverfahren noch genauer, kostengünstiger und durch kompaktere sowie zuverlässigere Geräte möglich.

### Kurzbeschreibung der Abbildungen

In den Abbildungen zeigen
- Fig. 1: eine schematische Darstellung eines Strahlengangs für lateralen Ausgleich mit Schwenkung eines Linsensystems zur optischen Abbildung eines realen Zwischenfokus um eine Achse durch oder nahe dem realen Zwischenfokus;
- Fig. 2: eine schematische Darstellung eines Strahlengangs für lateralen Ausgleich mit Schwenkung eines Linsensystems zur optischen Abbildung eines virtuellen Zwischenfokus um eine Achse durch oder nahe dem virtuellen Zwischenfokus;
- Fig. 3: eine schematische Darstellung eines Strahlengangs für lateralen Ausgleich mit Schwenkung eines Linsensystems zur optischen Abbildung eines realen Zwischenfokus nach Zwischenabbildung einer Faserendfläche um eine Achse durch oder nahe dem realen Zwischenfokus;
- Fig. 4: eine schematische Darstellung eines Strahlengangs für lateralen Ausgleich mit Schwenkung eines Linsensystems zur optischen Abbildung eines virtuellen Zwischenfokus, repräsentiert durch eine Faserendfläche um eine Achse durch oder nahe dem virtuellen Zwischenfokus; und
- Fig. 5: eine schematische Darstellung einer beispielhaften Ausgestaltung des Energiespeichers zur Erzeugung von Zentrierkräften/Rückstellkräften.

### Beschreibung von Ausführungsbeispielen

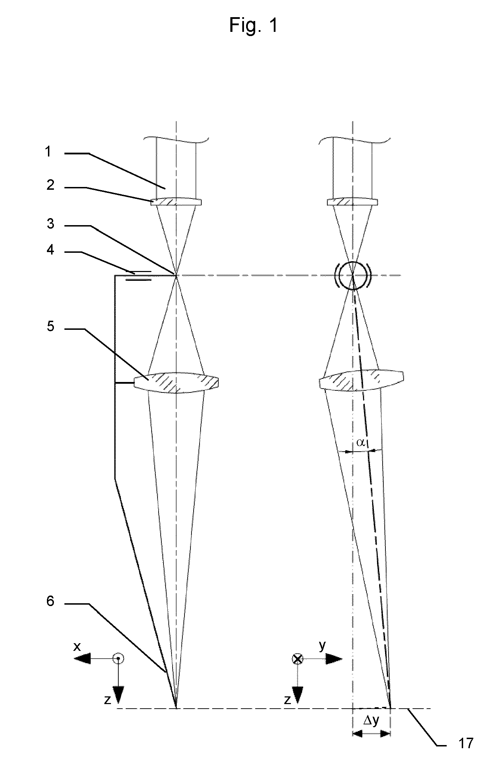

Fig. 1 zeigt eine schematische Darstellung eines Strahlengangs für lateralen Ausgleich in y-Richtung (laufende Auslenkrichtung) durch Schwenken einer schwenkbaren Optik 5, die einen realen Zwischenfokuspunkt 3 optisch auf einen Zielverlauf auf einem Werkstück 17 abbildet.

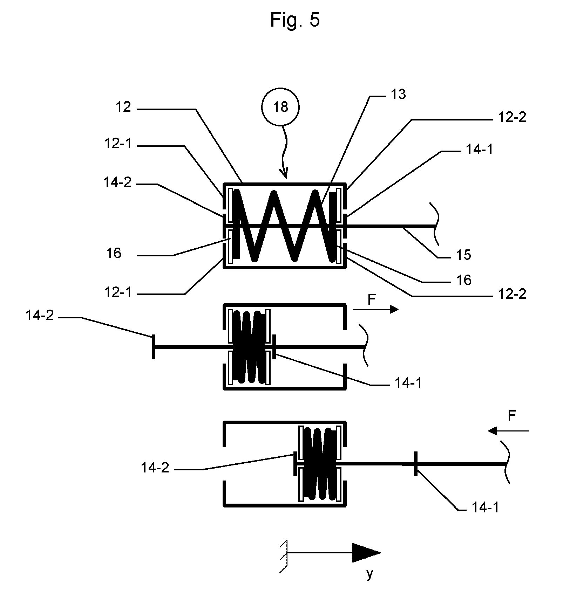

Eingangsseitig fällt ein kollimierter Laserstrahl 1 auf eine feste fokussierende Linse 2, die ein Laserstrahleingangsmodul ausbildet. Das Laserstrahleingangsmodul 2, 10 in Gestalt der festen und fokussierenden Linse 2 fokussiert den kollimierten Laserstrahl auf den realen Zwischenfokuspunkt 3. Dem Laserstrahleingangsmodul 2, 10 und dem realen Zwischenfokuspunkt 3 nachgelagert ist eine schwenkbare Strahlführungseinrichtung, die einen taktilen Abtaster 6 und eine in wenigstens eine Schwenkachse 4 schwenkbare Optik 5 umfasst. Der taktile Abtaster 6 und die schwenkbare Optik 5 sind starr miteinander verbunden und beide an einen Energiespeicher 18 mit einem in Fig. 1 nicht näher dargestellten elastischen Element angeschlossen. Der Energiespeicher 18 und der mechanische Anschluss der schwenkbaren Optik 5 und des taktilen Abtasters 6 an diesem sind beispielhaft in Fig. 5 näher dargestellt.

Der Zielverlauf wird von dem Abtaster 6 abgetastet. Der Laserstrahl 1 wird aufgrund der starren Verbindung und der Auslenkungen des Abtasters stets von der schwenkbaren Optik 5 auf den Zielverlauf, beispielsweise eine Fuge, projiziert und fokussiert. Dabei ist die Vorrichtung derart konzipiert, dass bei einer Auslenkung Δy des Abtasters 6 und einer damit einhergehenden Ausschwenkung der Optik 5 um den Winkel α, wie sie beispielsweise in der rechten Abbildung der Fig. 1 dargestellt ist, der reale Zwischenfokuspunkt 3 nicht verschoben wird, sondern vielmehr ortsfest bleibt. Die Schwenkachse 4 führt also stets durch diesen Zwischenfokuspunkt 3. Wie aus der Fig. 1 unmittelbar hervorgeht, beschränken sich die schwenkbar gelagerten Teile der Vorrichtung im Wesentlichen auf die Optik 5, den Abtaster 6 und die zwischen ihnen vorgesehene starre mechanische Verbindung. Aufgrund der so reduzierten Trägheitsmomente der schwenkbaren Teile ist eine noch schnellere und leichtgängigere Bearbeitung des Werkstücks 17 bei konstanter Fokussierung des Laserstrahls möglich.

Beispielsweise ist der Abtaster 6 durch einen Zusatzdraht, der beim Fügen für die Nahtbildung benötigt wird, gebildet. Der Zusatzdraht dient also gleichzeitig als mechanischer Taster. Der Energiespeicher 18 drückt den Zusatzdraht in den Fügestoß. Dort wird er durch den Laserstrahl abgeschmolzen. Wirken auf den Abtaster 6 äußere Kräfte, beispielsweise durch eine Krümmung oder Erhebung des Fügestoßes, so wird aufgrund der starren Verbindung die schwenkbare Optik 5 um den Schwenkwinkel α ausgeschwenkt. Dabei verändert sich die Lage des realen Zwischenfokuspunktes 3 nicht. Aufgrund der starren Verbindung zwischen Abtaster 6 und schwenkbarer Optik 5 bleibt der Laser bezogen auf den Abtaster 6, also gegebenenfalls auf den Zusatzdraht, fokussiert. Mithilfe des Energiespeichers 18 werden auf die schwenkbare Optik 5 und den mechanischen Abtaster 6 wirkende Rückstellkräfte erzeugt, die diese beiden Komponenten bei Abwesenheit von äußeren Kräften auf den mechanischen Abtaster 6 wieder in die im linken Teil der Fig. 1 dargestellte Ruhelage bewegen. Im Folgenden wird dieser Energiespeicher 18 mit Bezug auf Fig. 5 näher erläutert:

Fig. 5 zeigt eine schematische Darstellung einer beispielhaften Ausgestaltung des Energiespeichers 18 zur Erzeugung der eben genannten Rückstellkräfte/Zentrierkräfte. Der Energiespeicher 18 umfasst ein einziges elastisches Element in Gestalt einer Spiraldruckfeder 13, die einen Teil ihrer gespeicherten Energie in Abhängigkeit einer Amplitude der Ausschwenkung der schwenkbaren Optik 5 für das Zurückstellen von Optik 5 und Abtaster 6 in einer Ruhelage bereitstellt.

Die Spiraldruckfeder 13 ist in einem Gehäuse 12 mit einer zylindrischen Bohrung angeordnet. Das Gehäuse 12 hat an beiden Längsenden des Zylinders jeweils einen Bund als ortsfeste Anschlagsflächen 12-1 und 12-2. Die schwenkbare Optik 5 und der Abtaster 6 sind über wenigstens zwei Mitnehmeranschläge 14-1 und 14-2 an die Spiraldruckfeder 13 gekoppelt. Die beiden Mitnehmeranschläge 14-1 und 14-2 können beispielsweise über eine Art Stößel 15 mit der schwenkbaren Optik 5 und damit mit dem Abtaster 6 verbunden sein.

In den beiden unteren Abbildungen der Fig. 5 ist illustriert, dass bei einer Schwenkung der Optik 5 in Richtung -y nur der erste Mitnehmeranschlag 14-1 die Spiralfeder 13 verformt (mittlere Abbildung) und im umgekehrten Fall (untere Abbildung), also bei einer Schwenkung der Optik 5 in Richtung +y, nur der zweite Mitnehmeranschlag 14-2 die Spiralfeder in die andere Richtung verformt. Die Spannkraft (F) der Feder 13 wirkt in dem illustrierten Beispiel über Druckscheiben 16 auf die ortsfesten Anschläge 12-1 und 12-2 und die Mitnehmeranschläge 14-1 und 14-2. Durch diese Anordnung des Energiespeichers 18 können mit nur einem elastischen Element 13 Rückstellkräfte sowohl in negativer als auch in positiver Schwenkrichtung erzeugt werden. Gleitet der Abtaster 6 also beispielsweise über eine Krümmung des Fügestoßes, so resultiert dies zum einen in einer unmittelbaren, zur Auslenkung des Abtasters 6 korrespondierenden Ausschwenkung der Optik 5 und zum anderen in einer Kompression der Spiraldruckfeder 13 in eine der beiden möglichen Richtungen.

In Abwesenheit von äußeren Kräften auf den taktilen Abtaster 6 werden durch die Ausdehnung der Feder 13 die beiden Mitnehmeranschläge 14-1/14-2 plan zu den ortsfesten Anschlägen 12-1/12-2 des Gehäuses 12 ausgerichtet, wodurch der Abtaster 6 in die Mittellage gebracht wird. Wird der Abtaster 6 durch äußere Nahtführungskräfte ausgelenkt, so wird die Feder 13 von einem der Mitnehmeranschläge und der gegenüberliegenden ortsfesten Anschläge zusammengedrückt. Durch die symmetrische Anordnung der vier Anschlagsflächen 12-1/12-2 und 14-1/14-2 ist diese Auslenkbewegung in positive und negative Auslenkungsrichtung möglich.

In den Fig. 2 bis 4 sind drei weitere mögliche Ausgestaltungen der erfindungsgemäßen Vorrichtung zum Führen eines Laserstrahls schematisch dargestellt, wobei allen gemein ist, dass die schwenkbare Optik 5 samt taktilem Abtaster 6 durch einen in Fig. 5 beispielhaft dargestellten Energiespeicher 18 bei Abwesenheit von äußeren Nahtführungskräften zurück in eine Ruhelage bewegt werden können.

In Fig. 2 ist eine Variante gezeigt, bei der der kollimierte Laserstrahl 1 nicht auf eine feste fokussierende Linse 2 fällt, sondern auf eine feste zerstreuende Linse 7, die sich im Strahlengang zwischen Zwischenfokuspunkt 8 und Werkstückoberfläche 17 befindet. Demnach handelt es sich bei dem Zwischenfokuspunkt 8 um einen virtuellen Zwischenfokuspunkt. Im Gegensatz zur schwenkbaren Optik 5 ist die feste zerstreuende Linse 7 nicht starr mit dem Abtaster 6 und damit auch nicht mit dem Energiespeicher 18 verbunden. Vielmehr ist die zerstreuende Linse 7 fest im Strahlengang installiert. Aber auch in dieser Ausführungsform verändert sich die Lage des virtuellen Zwischenfokuspunkt 8 bei Ausschwenkung der schwenkbaren Optik 5 um den Schwenkwinkel α, gemäß der rechten Abbildung in Fig. 2, nicht.

Bei der Ausführungsform gemäß Fig. 3 wird der Laserstrahl 1 von einem Faserlaser 9 bereitgestellt. Dieser Laserstrahl 1 fällt zunächst auf eine Zwischenabbildungsoptik 10, die den Laserstrahl 1 sodann auf den realen Zwischenfokuspunkt 3 fokussiert. Die schwenkbare Optik 5 ist in diesem Beispiel durch eine Doppellinsenanordnung realisiert, die eine bessere Nachführung des Fokus auf dem Werkstück 17 in z-Richtung erlaubt. Die Doppellinsenanordnung ist mit dem Abtaster 6 fest verbunden und axial, also in Abstandsrichtung z, federnd angeordnet. Dadurch wird zum einen gewährleistet, dass der Abtaster 6 in ständigem Kontakt mit dem Fügestoß ist und der Laserfokus aufgrund der starren Verbindung zwischen Abtaster 6 und schwenkbarer Optik 5 stetig nachgeführt wird.

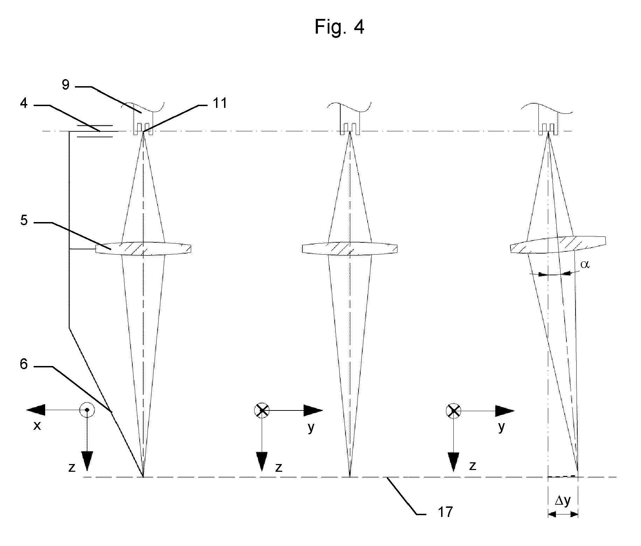

Schließlich zeigt Fig. 4 eine Variante, bei der der Laserstrahl 1 wiederum durch einen Faserlaser 9 bereitgestellt wird und bei der der Zwischenfokuspunkt 3, auf einen Punkt in einer Faserendfläche 11 fällt. Ein Zwischenabbilden des Laserstrahls 1 erfolgt demnach nicht. Die linke und die mittlere Ansicht zeigen jeweils einen unausgelenkten Zustand, wobei bei der rechten Ansicht die schwenkbare Optik 5 um den Schwenkwinkel α ausgeschwenkt ist, was in einer lateralen Auslenkung Δy resultiert.

### Bezugszeichenliste

- 1: kollimierter Laserstrahl
- 2: feste fokussierende Linse
- 3: realer Zwischenfokuspunkt
- 4: Schwenkachse
- 5: bewegliche abbildende Optik
- 6: taktiler Abtaster
- 7: feste zerstreuende Linse
- 8: virtueller Zwischenfokuspunkt
- 9: Lichtleiterkabel
- 10: Zwischenabbildungsoptik
- 11: Faserendfläche
- 12: Federgehäuse mit Anschlägen
- 12-1, 12-2: Ortsfeste Anschlagsflächen
- 13: Spiraldruckfeder
- 14: Mitnehmeranschläge
- 14-1: erster Mitnehmeranschlag
- 14-2: zweiter Mitnehmeranschlag
- 15: Stößel zur Kraftkopplung
- 16: Druckscheiben
- 17: Werkstückoberfläche
- 18: Energiespeicher
- α: Schwenkwinkel
- Δy: resultierende laterale Auslenkung
- F: laterale Kraft
- x: Verfahrrichtung
- y: laterale Auslenkrichtung
- z: Strahlrichtung

## Patentansprüche

1. Vorrichtung zum Führen eines Laserstrahls entlang eines Zielverlaufs, aufweisend:
- ein Laserstrahleingangsmodul (2; 7; 10), das ausgebildet ist, einen einfallenden Laserstrahl (1) auf eine dem Laserstrahleingangsmodul (10) nachgelagerte und schwenkbare Strahlführungseinrichtung (4, 5, 6) zu richten, wobei die Strahlführungseinrichtung (4, 5, 6) zum Projizieren des Laserstrahls (1) auf den Zielverlauf angeordnet ist und umfasst:
- eine entlang wenigstens einer Schwenkachse (4) schwenkbare Optik (5) und
- einen mit der schwenkbaren Optik (5) verbundenen taktilen Abtaster (6), der ausgebildet ist, den Zielverlauf berührend abzutasten und die schwenkbare Optik (5) entsprechend auszulenken,
**dadurch gekennzeichnet, dass** im Strahlengang des Laserstrahls (1) vor der schwenkbaren Optik (5) ein Zwischenfokuspunkt (3; 8) ausgebildet ist und dass die Schwenkachse (4) der schwenkbaren Optik (5) durch den Zwischenfokuspunkt (3; 8) verläuft.

2. Vorrichtung nach Anspruch 1, **dadurch gekennzeichnet, dass** das Laserstrahleingangsmodul (2; 10) ausgebildet ist, den Laserstrahl (1) auf den Zwischenfokuspunkt (3) zu fokussieren und die schwenkbare Optik (5) ausgebildet ist, den Zwischenfokuspunkt (3) auf den Zielverlauf abzubilden.

3. Vorrichtung nach Anspruch 2, **dadurch gekennzeichnet, dass** das Laserstrahleingangsmodul (2; 10) eine Lichtleitfaser (9) und eine Zwischenabbildungsoptik (10) aufweist, wobei die Zwischenabbildungsoptik (10) ausgebildet ist, ein ihr zugewandtes Ende der Lichtleitfaser (9) auf den Zwischenfokuspunkt (3) abzubilden.

4. Vorrichtung nach Anspruch 1, **dadurch gekennzeichnet, dass** das Laserstrahleingangsmodul (2; 10) als Lichtleitfaser (9) ausgebildet ist und der Zwischenfokuspunkt (3, 8) sich auf der der schwenkbaren Optik (5) zugewandten Seite der Lichtleitfaser (9) befindet und die schwenkbare Optik (5) ausgebildet ist, den Zwischenfokuspunkt (3, 8) auf den Zielverlauf abzubilden.

5. Vorrichtung nach Anspruch 1, **dadurch gekennzeichnet, dass** das Laserstrahleingangsmodul (2; 7; 10) ausgebildet ist, einen nicht fokussierten Strahlengang zu erzeugen und die schwenkbare Optik (5) eingangsseitig einen virtuellen Zwischenfokus (8) besitzt, der den Zwischenfokuspunkt (3, 8) bildet und der sich im kollimierten Strahlengang befindet.

6. Vorrichtung nach einem der Ansprüche 1 bis 5, bei der
- der taktile Abtaster (6) und die schwenkbare Optik (5) an einen Energiespeicher (18) mit einem elastischen Element (13) angeschlossen sind,
- das elastische Element (13) des Energiespeichers (18) ausgebildet ist, einen Teil seiner gespeicherten Energie in Abhängigkeit einer Ausschwenkung (α) der schwenkbaren Optik (5) für das Zurückstellen von Optik (5) und Abtaster (6) in eine Ruheposition bereitzustellen, und bei der
- die Optik (5) und der Abtaster (6) über wenigstens zwei Mitnehmeranschläge (14-1, 14-2) an das elastische Element (13) gekoppelt sind, von denen bei einer Schwenkung der Optik (5) in positive Schwenkachsenrichtung nur der erste Mitnehmeranschlag (14-1) das elastische Element (13) verformt und bei einer Schwenkung in negative Schwenkachsenrichtung nur der zweite Mitnehmeranschlag (14-2).

7. Vorrichtung nach Anspruch 6, bei der das elastische Element (13) einstückig ausgebildet ist.

8. Vorrichtung nach einem der vorstehenden Ansprüche 6 oder 7, bei der das elastische Element (13) in einem Gehäuse (12) gelagert ist, das wenigstens zwei ortsfeste Anschlagsflächen (12-1, 12-2) aufweist, wobei das elastische Element (13) bei Auslenkung in positive Schwenkachsenrichtung nur gegen die erste Anschlagsfläche (12-1) gepresst wird und bei Auslenkung in negative Schwenkachsenrichtung nur gegen die zweite Anschlagsfläche (12-2).

9. Vorrichtung nach Anspruch 8, bei der eine der beiden Anschlagsflächen (12-1; 12-2) und einer der beiden Mitnehmeranschläge (14-1; 14-2) in eine Verformungsrichtung des elastischen Elements (13) verstellbar angeordnet sind.

10. Vorrichtung nach Anspruch 8 oder 9, bei der das elastische Element eine mechanische Feder (13) ist, die an beiden Enden Druckscheiben (16) aufweist, wobei die Druckscheiben (16), die Mitnehmeranschläge (14-1, 14-2) und die ortsfesten Anschlagsflächen (12-1, 12-2) jeweils kalottenförmig ausgestaltet sind.

11. Vorrichtung nach einem der vorstehenden Ansprüche, bei der der Abtaster (6) etwa in Laserstrahlrichtung (z) über eine elastische Komponente federnd gelagert ist.

12. Vorrichtung nach Anspruch 11, bei der das Laserstrahleingangsmodul (2; 10) an die elastische Komponente gekoppelt ist.

13. Vorrichtung nach einem der vorstehenden Ansprüche, bei der die schwenkbare Optik (5) starr mit dem Abtaster (6) verbunden ist.

14. Vorrichtung nach einem der vorstehenden Ansprüche, bei der der Abtaster einen für eine Nahtbildung notwendigen Zusatzdraht (6) umfasst.

15. Laserbearbeitungssystem mit einer Vorrichtung nach einem der vorstehenden Ansprüche.

## Claims

1. Device for guiding a laser beam along a target path, comprising:
- a laser beam input module (2; 7; 10) that is designed to point an incident laser beam (1) onto a pivotable beam guiding apparatus (4, 5, 6) which is downstream of the laser beam input module (10), the beam guiding apparatus (4, 5, 6) being arranged in order to project the laser beam (1) onto the target path and comprising:
- an optics (5) that is pivotable in the direction of at least one pivot axis (4) and
- a tactile scanner (6), connected to the pivotable optics (5), which is designed to perform a tactile scan of the target path and to deflect the pivotable optics (5) accordingly,
**characterised in that** an intermediate focal point (3; 8) is formed in the beam path of the laser beam (1) upstream of the pivotable optics (5), and **in that** the pivot axis (4) of the pivotable optics (5) extends through the intermediate focal point (3; 8).

2. Device according to claim 1, **characterised in that** the laser beam input module (2; 10) is designed to focus the laser beam (1) onto the intermediate focal point (3) and the pivotable optics (5) is designed to reproduce the intermediate focal point (3) on the target path.

3. Device according to claim 2, **characterised in that** the laser beam input module (2; 10) comprises an optical fibre (9) and an intermediate imaging optics (10), the intermediate imaging optics (10) being designed to reproduce an end of the optical fibre (9), which end faces the intermediate imaging optics onto the intermediate focal point (3).

4. Device according to claim 1, **characterised in that** the laser beam input module (2; 10) is designed as an optical fibre (9) and the intermediate focal point (3, 8) is located on the side of the optical fibre (9) that faces the pivotable optics (5), and the pivotable optics (5) is designed to reproduce the intermediate focal point (3, 8) onto the target path.

5. Device according to claim 1, **characterised in that** the laser beam input module (2; 7; 10) is designed to generate a non-focused beam path, and the pivotable optics (5) has at its input a virtual intermediate focus (8) that forms the intermediate focal point (3, 8) and is located in the collimated beam path.

6. Device according to any of claims 1 to 5, wherein
- the tactile scanner (6) and the pivotable optics (5) are connected to an energy store (18) by means of a resilient element (13),
- when the pivotable optics (5) is pivoted out (α), the resilient element (13) of the energy store (18) is designed to provide a portion of its stored energy in order to return the optics (5) and scanner (6) to a resting position, and wherein
- the optics (5) and the scanner (6) are coupled to the resilient element (13) by at least two driver stops (14-1, 14-2), of which only the first driver stop (14-1) deforms the resilient element (13) when the optics (5) pivots in the positive pivot axis direction and only the second driver stop (14-2) deforms the resilient element when the optics pivots in the negative pivot axis direction.

7. Device according to claim 6, wherein the resilient element (13) is formed in one piece.

8. Device according to either of the preceding claims 6 or 7, wherein the resilient element (13) is mounted in a housing (12) that comprises at least two stationary stop surfaces (12-1, 12-2), wherein the resilient element (13) is pressed only against the first stop surface (12-1) upon deflection in the positive pivot axis direction and only against the second stop surface (12-2) upon deflection in the negative pivot axis direction.

9. Device according to claim 8, wherein one of the two stop surfaces (12-1; 12-2) and one of the two driver stops (14-1; 14-2) are arranged such that they are movable in a deformation direction of the resilient element (13).

10. Device according to either claim 8 or claim 9, wherein the resilient element is a mechanical spring (13) that has thrust washers (16) at both ends, wherein the thrust washers (16), the driver stops (14-1, 14-2) and the stationary stop surfaces (12-1, 12-2) are each dome-shaped.

11. Device according to any of the preceding claims, wherein the scanner (6) is resiliently mounted approximately in the laser beam direction (z) by means of a resilient component.

12. Device according to claim 11, wherein the laser beam input module (2; 10) is coupled to the resilient component.

13. Device according to any of the preceding claims, wherein the pivotable optics (5) is rigidly connected to the scanner (6).

14. Device according to any of the preceding claims, wherein the scanner comprises a filler wire (6) required for seam formation.

15. Laser processing system comprising a device according to any of the preceding claims.

## Revendications

1. Dispositif de guidage d'un faisceau laser le long d'un chemin cible comportant:
- un module (2; 7) d'entrée de faisceau laser constitué pour diriger un faisceau (1) laser incident sur un dispositif (4, 5, 6) de guidage de faisceau pivotant et monté en aval du module (10) d'entrée de faisceau laser, le dispositif (4, 5, 6) de guidage de faisceau étant disposé pour projeter le faisceau (1) laser sur le chemin cible et comprenant:
- une optique (5) pivotante suivant au moins un axe(4) de pivotement et
- un détecteur (6) tactile relié à l'optique (5) pivotante et constitué pour détecter, par contact, le chemin cible et dévier, en conséquence, l'optique (5) pivotante,
**caractérisé en ce qu'**il est constitué, dans le trajet du faisceau (1) laser avant l'optique (5) pivotante, un point (3; 8) focal intermédiaire et **en ce que** l'axe (4) de pivotement de l'optique (5) pivotante passe par le point (3; 8) focal intermédiaire.

2. Dispositif suivant la revendication 1, **caractérisé en ce que** le module (2; 10) d'entrée de faisceau laser est constitué pour focaliser le faisceau (1) laser sur le point (3) focal intermédiaire et l'optique (5) pivotante est constituée pour former une image du point (3) focal intermédiaire sur le chemin cible.

3. Dispositif suivant la revendication 2, **caractérisé en ce que** le module (2; 10) d'entrée de faisceau laser a une fibre (9) optique et une optique (10) de formation d'image intermédiaire, l'optique (10) de formation d'image intermédiaire étant constituée pour former une image de l'extrémité tournée vers elle de la fibre (9) optique sur le point (3) focal intermédiaire.

4. Dispositif suivant la revendication 1, **caractérisé en ce que** le module (2; 10) d'entrée de faisceau laser est constitué sous la forme d'une fibre (9) optique et le point (3) focal intermédiaire se trouve du côté tourné vers l'optique (5) pivotante de la fibre (9) optique et l'optique (5) pivotante est constituée pour former une image du point (3; 8) focal intermédiaire sur le chemin cible.

5. Dispositif suivant la revendication 1, **caractérisé en ce que** le module (2; 7; 10) d'entrée de faisceau laser est constitué pour produire un trajet de faisceau non focalisé et l'optique (5) pivotante a, du côté de l'entrée, un foyer (8) intermédiaire virtuel, qui forme le point (8; 3) focal intermédiaire et qui se trouve dans le chemin du faisceau collimaté.

6. Dispositif suivant l'une des revendications 1 à 5, caractérisé dans lequel
- le détecteur (6) tactile et l'optique (5) pivotante sont raccordés à un accumulateur (18) d'énergie ayant un élément (13) élastique,
- l'élément (13) élastique de l'accumulateur (18) d'énergie est constitué pour mettre à disposition une partie de son énergie accumulée en fonction d'un pivotement (α) de l'optique pour ramener l'optique (5) pivotante et le détecteur (6) dans une position de repos, et dans lequel
- l'optique (5) et le détecteur (6) sont couplés à l'élément (13) élastique par au moins deux butées (14-1, 14-2) d'entraîneur dont, lors d'un pivotement de l'optique (5) dans un sens positif de l'axe de pivotement, seule la première butée (14-1) d'entraîneur déforme l'élément (13) élastique, et dans un pivotement dans le sens négatif de l'axe de pivotement, seule la deuxième butée (14-2) d'entraîneur déforme l'élément (13) élastique.

7. Dispositif suivant la revendication 6, dans lequel l'élément (13) élastique est constitué d'une seule pièce.

8. Dispositif suivant l'une des revendications 6 ou 7, dans lequel l'élément (13) élastique est monté dans un boîtier (12) qui a au moins deux surfaces (12-1, 12-2) de butées à poste fixe, l'élément (13) élastique étant comprimé lors d'une déviation dans la direction positive de l'axe de pivotement seulement contre la première surface (12-1) de butée, et lors d'une déviation dans le sens négatif de l'axe de pivotement, seulement contre la deuxième surface (12-2) de butée.

9. Dispositif suivant la revendication 8, dans lequel l'une des deux surfaces (12-1, 12-2) de butée et l'une des deux butées (14-1, 14-2) d'entraîneur sont montées réglables dans une direction de déformation de l'élément (13) élastique.

10. Dispositif suivant la revendication 8 ou 9, dans lequel l'élément élastique est un ressort (13) mécanique qui a des disques (16)d'application d'une pression aux deux extrémités, les disques (16) d'application d'une pression, les butées (14- 1, 14-2) d'entraîneur et les surfaces (12-1, 12-2) de butée à poste fixe étant conformés respectivement en calottes.

11. Dispositif suivant l'une des revendications précédentes, dans lequel le détecteur (6) est monté élastiquement à peu près dans la direction (z) du faisceau laser par un élément élastique.

12. Dispositif suivant la revendication 11, dans lequel le module (2; 10) d'entrée du faisceau laser est couplé à l'élément élastique.

13. Dispositif suivant l'une des revendications précédentes, dans lequel l'optique (5) pivotante est reliée rigidement au détecteur (6) .

14. Dispositif suivant l'une des revendications précédentes, dans lequel le détecteur comprend un fil (6) métallique supplémentaire nécessaire pour une formation de cordon.

15. Système d'usinage laser ayant un dispositif suivant l'une des revendications précédentes.
